(19) Europäisches Patentamt
European Patent Office
Office européen des brevets

(11) **EP 1 936 836 A2**

(12) **EUROPEAN PATENT APPLICATION**

(43) Date of publication:
**25.06.2008 Bulletin 2008/26**

(51) Int Cl.:
***H04B 7/185*** *(2006.01)*

(21) Application number: **07023770.6**

(22) Date of filing: **07.12.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **18.12.2006 US 612045**

(71) Applicant: **HARRIS CORPORATION**
**Melbourne, Florida 32919 (US)**

(72) Inventors:
• **Beadle, Edward R.**
**Melbourne**
**FL 32940 (US)**
• **Dishman, John F.**
**Melbourne**
**FL 32940 (US)**

(74) Representative: **Schmidt, Steffen J.**
**Wuesthoff & Wuesthoff**
**Patent- und Rechtsanwälte**
**Schweigerstrasse 2**
**81541 München (DE)**

(54) **Method and apparatus for single input, multiple output selection diversity aiding signal tracking**

(57) An obscuration'information'-aided mechanism controls which of a plurality of spatially diverse antennas having different views of a satellite is to be coupled to a receiver, by comparing respective spatial maps of quantized visibility values, representative of the abilities of the antennas to see the satellite, with information representative of the pointing directions of the antennas. The antenna having the best view of the satellite is selected.

*FIG. 6*

**Description**

The present invention relates in general to communication systems and subsystems thereof, wherein either the transmitter terminal and/or receiver terminal may be a mobile platform, with possibly high dynamic motion and possibly non-zero and/or non-constant acceleration between the transmitter terminal and the receiver terminal, such as, but not limited to the satellite communication system disclosed in U.S. Patent Application Serial No. 11/384,868 application. The present invention is particularly directed to an (obscuration) 'information' or knowledge'-aided mechanism for selecting which one of a plurality of spatially diverse antennas, that have respectively different views of the transmitter (e.g., satellite) is to be used to receive downlink communication signals from the transmitter, for the purpose of enhancing the receiver terminal's ability to perform time recovery and frequency recovery of a time and frequency hopped data signal, and thereby enable the receiver to properly demodulate the received signal.

Successful operation of a communication system requires time and frequency synchronization between the transmitter and receiver. In order to maximize the availability of link resources for the transport of information, it is desirable that link resources used for synchronization be minimized. In a system wherein there is relative motion between the transmitter and receiver, such as in a satellite or airborne communication system, cell phone system, and the like, this problem becomes more complex, due to kinematic parameters associated with motion, particularly, acceleration by either or both of the transmitter or receiver.

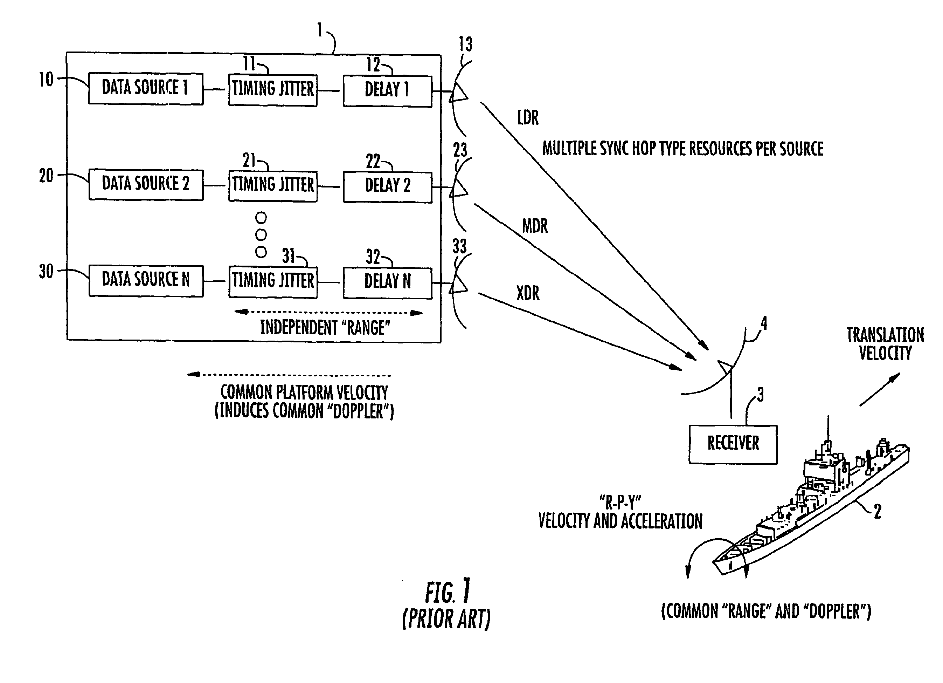

Figure 1 diagrammatically illustrates a non-limiting, reduced complexity, example of a satellite communication (SATCOM) system of the type described in the above-referenced '868 application, that is subject to such kinematic influences. As shown therein, the system includes a satellite 1, which serves as a platform for a transmitter terminal containing one or more data sources, that transmit to a receiver terminal 3, mounted on a (terrestrial) platform 2, such as a ship, which is dynamic. In the illustrated example, satellite 1 is shown as containing a plurality (e.g., three) respectively different data rate sources 10, 20 and 30, which will be referred to individually as L, M, and X. Because these sources are supported by a common transmit platform (satellite 1), movement of the satellite will introduce a substantially common range (timing) error, as well as a common velocity (frequency) error, into each source's forward link signal.

There are somewhat independent payload timing errors/jitters 11, 21, 31 and delays or offsets 12, 22 and 33 between the L, M, and X signals, as they are processed in slightly different manners prior to arriving at their transmit antennas 13, 23 and 33. All of the transmit signals (L, M and X) undergo a common Doppler shift, which is governed by the motion of the satellite 1 relative to the receive terminal 3 on the ship 2 which, as noted above, is dynamic. The Doppler shift for the individual L, M, and X signals is dependent on the transmitter hop frequency for each signal and the relative line-of-sight (LOS) velocity between the transmitter and receiver platforms.

As a result, for frequency-hopped signals, the signals will appear to have time-varying Doppler, which significantly complicates timing and frequency acquisition using conventional phase locked loop (PLL)-based designs. Further, where there is acceleration along the LOS (which occurs in the ship-borne receiver environment of the system shown in Figure 1), high order PLLs must be used. Unfortunately, high-order PLLs have limited utility in practical systems due to difficulty in design and stabilization.

In order to receive and recover data communication signals from the satellite downlink, it is necessary that the receiver terminal have some a priori knowledge of the downlink signal it is to acquire. The receiver terminal is typically provided with nominal knowledge of the timing and transmit frequency of a synchronization pulse for a given remote data source, by some ancillary facility and knowledge of the pre-planned time/frequency hopping patterns (e.g., TRANSEC). Knowing the time and frequency hopping plan for each transmit source allows the receiver terminal to nominally know when, and at what frequency, to look for synchronization hops, which are the resource exploited by the receiver terminal to make time and frequency error measurements, and adjust the receiver terminal's time and frequency control, per transmitted communication signal, so that data may be recovered. In a typical application, a set of synchronization hops per signal may be reserved in the link. In the three transmitter source example of Figure 1, there would be three sets of synchronization hops (i.e., coarse, fine and extra-fine) defined per signal source (i.e., the L, M, and X data sources 10, 20 and 30, respectively).

For satellite downlink systems, the orbital path of the satellite is governed by well-known physics, which allows the receiver terminal's associated antenna positioning subsystem to effectively continuously maintain the boresight of the receiver terminal antenna pointed at the satellite. Given knowledge of the direction of the incoming signal, a pseudo-range maintained in the receiver terminal is able to provide a data for locating or determining the range to the transmitter. Pseudo range may be derived from initial nominal range knowledge available from an ancillary source, and is continually updated with range error measurements derived from time error measurements made from synchronization resources.

The receiver terminal must also account for relative LOS motion between itself and the (assumed at rest (geosynchronous) satellite, especially where the receiver terminal is mounted on a dynamic platform, such as a ship. The relative LOS motion manifests itself as time and frequency errors in the downlink signal that is to be tracked. To account for this motion, the receiver terminal may be supplied with a number of communication and position/motion parameters associated with the satellite and/or the receiver terminal itself (e.g., shipboard navigation data), that are intended to enable the receiver terminal to make timing and frequency corrections, so that a respective downlink signal may be demodulated and data recovered. However, using a ship's navigation system to compute corrections that compensate for the range (timing) and velocity (frequency) errors in the downlink signal induced by the movement of the ship has shortcomings, including the potential absolute and time-varying latency in receiving the ship's navigation data. In addition, the use of global positioning system (GPS) data would be inadequate, since data for time and frequency corrections must be exceedingly accurate, especially if the data source to be tracked has a relatively high data rate, not to mention the negative impact on receiver complexity.

In a satellite downlink communication system, synchronization hops for each source will arrive at the receiver terminal at a rate that is dependent on the source type and in a non-periodic manner. For example, in the illustrated system, synchronization hops transmitted by L source 10 may arrive at an average rate that is a multiple of those of M source 20, and the inter-pulse arrival times of the L, M, and X streams, respectively, may be non-constant due to time-hopping. As pointed out above, PLL-based mechanisms for deriving timing and frequency information used for demodulation cannot readily accommodate such measurement sequence variations and will fail when applied to time and frequency hopped sync signals, particularly in environments subject to kinematic influences that include acceleration.

Although prior art literature has suggested that Kalman filters may be used in the track state of a communication link, none has addressed the relationship between communication synchronization parameters (time and frequency offsets) and kinematic variables, which is the basic problem in a satellite downlink environment, where time difference and range change rate are unknown. In addition to PLL-based proposals and limited use Kalman filter methodologies, other, non-linear, 'Kalman-like' techniques, containing banks of matched non-linear filters - one for each possible frequency (that are highly stylized and matched to individual problems) - have been proposed. However, such schemes will not work in practice for the time and frequency acquisition and tracking problem encountered in a dynamic communication system of the type described above, as their hardware implementations would occupy an unacceptable amount of semiconductor real estate to fit within a few ASICs, and would consume an extraordinary amount of power. Moreover, if implemented digitally, their associated processors could not process data fast enough to realize a viable solution for data rates of practical interest.

These and other drawbacks of conventional time and frequency recovery and tracking approaches for a system environment subject to kinematic (including acceleration) inputs are successfully remedied by the time/frequency tracker (TFT) module disclosed in the above-referenced '868 application, which employs a Kalman filter, functional parameters of which are derived in accordance with receiver terminal-associated kinematic measurements. These kinematic measurements include range and velocity measurements derived from timing and frequency errors measured on selected synchronization hop resources, the times of transmission and frequencies of which are aperiodically, or pseudo randomly, hopped within one or more signals transmitted from the satellite. These timing and frequency error measurements, as well as acceleration measurements, are combined into kinematic data vectors, which are used to update a Kalman filter kinematic state vector. The Kalman filter kinematic state vector provides updated kinematic state (time/frequency) estimates to a kinematic state estimate processor, which uses the Kalman filter output data to adjust the sampling clock for the receiver terminal processor's associated analog-to-digital converter within the demodulator, to achieve demodulation and recovery of data with improved accuracy.

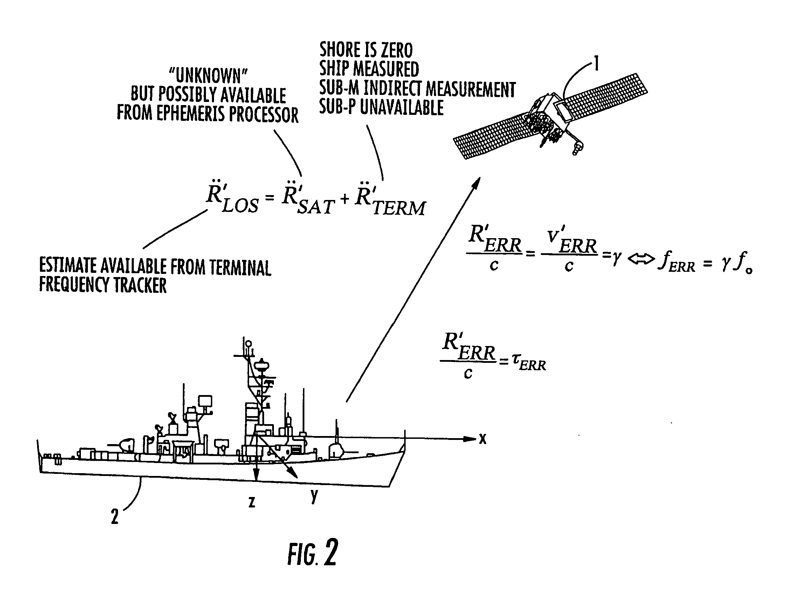

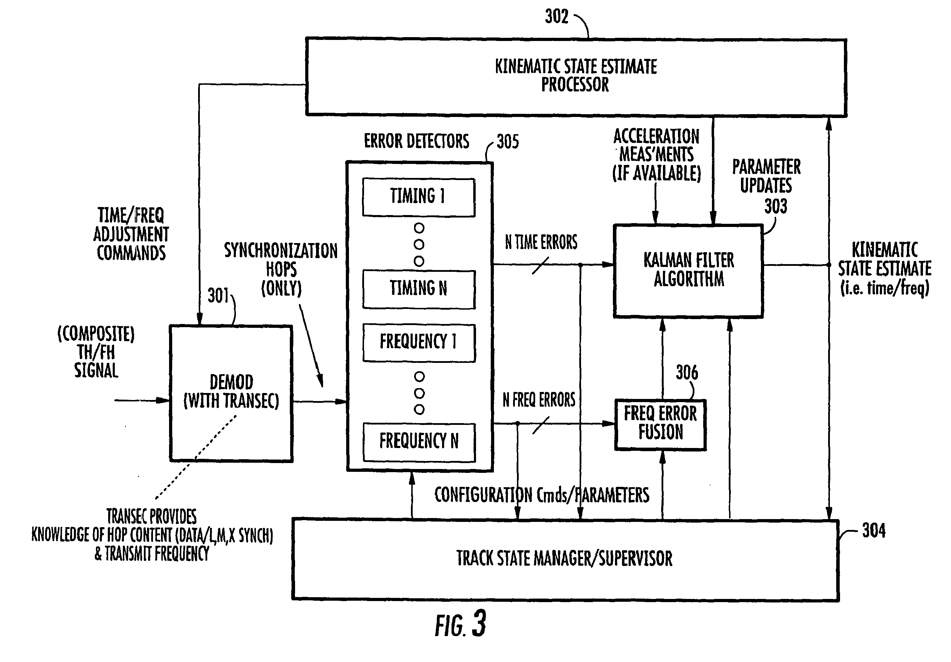

The manner in which these kinematic variables manifest themselves in the satellite communication system of Figure 1 is shown in Figure 2, and the exploited of such variables by the Kalman filter-based TFT module disclosed in the '868 application is diagrammatically illustrated in the functional block diagram of Figure 3. More particularly, Figure 2 shows satellite 1 as having some time varying downlink communication path (typically curved through the atmosphere) range $R'_{SAT}$ between the antenna of the receiver terminal on the ship 2 in a'null reference' position and the transmit aperture. This range $R'_{SAT}$, although unknown, may be initially estimated by an ephemeris processor on board the ship 2.

There is an additional term, which is additive to the total LOS range $R'_{LOS}$, that is induced by the time varying motion of the receiver terminal, which causes a time varying range of $R'_{TERM}$. This motion is largely unknown directly, save for possibly the measurement of acceleration. The receiver platform (ship 2) employs a measurement subsystem (such as an accelerometer), that is coupled with the antenna and provides a measure of LOS acceleration - which is approximately equal to double derivative of the boresight range $R'_{LOS}$.

The frequency error measurements and timing error measurements used by the Kalman filter-based time and frequency tracker module disclosed in the '868 application are conducted with respect to a plurality of synchronization pulses per signal (with the error measurements being converted into kinematic equivalents), as well as a kinematic measurements associated with terminal motion. In this way, frequency errors will manifest themselves as velocity errors, which correspond to the error in the rate of change of range $R'$, and time errors will manifest themselves as LOS range errors. The frequency error may be expressed as $f_{ERR} = \gamma f_o$ where, $f_o$ is the nominal transmit frequency and $\gamma$, which is associated with relative motion between the ship and the satellite, is the ratio of the current LOS velocity to the speed of light'c'. Thus, frequency error can be used to derive a velocity measurement once the nominal transmit frequency is known. Figure 2 also shows range errors as scaled time errors, where the conversion is given by the speed of light 'c'.

Attention is now directed to Figure 3, which diagrammatically illustrates the overall architecture of the receiver terminal, including a front end demodulator and the Kalman filter-based time/frequency tracker (TFT) module disclosed in the '868 application. As shown therein, input signals from a satellite downlink-monitoring antenna, the front end of the receiver includes a programmable demodulator 301, which inputs signals from an associated low noise amplifier and downconverter subsystem (which may correspond to the antenna and associated receiver terminal mounted on the ship 2 of Figure 2) are supplied. The programmable demodulator 301 is supplied with nominal knowledge (i.e., TRANSEC) of the time and frequency hop patterns of the downlinked signals from a kinematic state estimate processor 302 and uses this information to adjust or refine the tuning of all sampling epochs and oscillators in the receiver terminal.

As detailed in the '868 application, the downlink signal may comprise a continuous stream (such as single frequency-hopped carrier) of multi timeslot data frames, selected sub-frames of which contain one or more synchronization hops, for which time and frequency measurements are available. For the purposes of Kalman filter update processing, the period defining 'simultaneity' is the pseudo sub-frame duration or Kalman update cycle. Synchronization hops, for which time and frequency measurements are available, are selectively inserted into the time slots of a data frame in a pseudo random manner. As pointed out above, in addition to relying upon timing and frequency errors, derived from the synchronization hops, the Kalman filter of the receiver terminal's time/frequency tracker (TFT) module relies upon kinematic data, such as that sourced from an accelerometer subsystem aligned with the boresight of the receiver terminal's antenna, which is continuously 'pointed' at the satellite, so that timing and frequency errors derived from the synchronization hops are more accurate.

Referring again to Figure 3, the kinematic state estimate processor 302 receives kinematic state estimates, as generated by a Kalman filter operator/algorithm 303. Kalman filter operator 303 has an architecture and coefficient update methodology that uses time and frequency errors derived from received time- and frequency-hopped synchronization pulses, in combination with accelerometer-sourced kinematic updates representative of motion inputs to the receiver terminal, and which produce perturbations in the times of arrival and frequencies of the hopped sync pulses, to produce time and frequency correction values. These time and frequency correction values are employed by the kinematic state estimate processor 302 to generate the time and frequency adjustment commands to the demodulator 301 for refining the frequency and times of transitions in its sampling clock.

Because its operation kinematic domain-based, the Kalman filter operator 303 enables the tracking processor to continuously track, with high accuracy, time and frequency variations in one or more hopped synchronization signals, that are conveyed within pseudo randomly occurring time slots of one or more forward link signals from the transmitter. The Kalman filter is thereby able to provide the basis for synchronization all timing epochs and frequencies needed to demodulate the received signals in a multi-user satellite communication system.

Configuration and operational characteristics of the Kalman filter operator 303 are established by configuration commands and parameters supplied by a (track state manager/supervisor) control processor 304, to enable the Kalman filter to operate with a prescribed of satellite-receiver terminal configuration. The track state manager 304 is also coupled to receive kinematic state estimates produced by Kalman filter operator 303. The track state manager 304 monitors these estimates to determine whether the performance of the Kalman filter operator 303 is acceptable. If the monitored estimates produced by the Kalman filter operator 303 indicate a performance level (kinematic state estimate error) that has departed from a prescribed application dependent tolerance, the track state manager processor 304 provides configuration adjustment commands (i.e., controls the state error covariance matrix, so as to increase the Kalman gain), as necessary, to bring the performance of the Kalman filter operator 303 back with acceptable levels.

A timing and frequency error detection subsystem 305 is coupled to receive data representative of the sampling of detected time- and frequency-hopped synchronization pulses from programmable demodulator 301. Time and frequency error detection subsystem 305 scales the errors to form kinematic measurements of range and velocity error. Range errors are scaled time errors, where the conversion is given by where the constant c is the speed of light. Velocity errors are scaled frequency errors. As with Kalman filter operator 303, configuration commands and operational parameters for the timing and frequency error detection subsystem 305, as well as those for a frequency error fusion operator 306, are provided by track state manager/supervisor 304.

The timing and frequency error detection subsystem 305 contains a plurality N of timing error detectors: Timing 1, ..., Timing N; and a plurality N of frequency error detectors: Frequency 1, ..., Frequency N. A respective timing error detector, Timing i, is associated with a particular data rate synchronization pulse, and is operative to conduct timing error measurements on a specified ith one of N synchronization pulses, with the value $\tau_{ERRi}$ of a timing error measurement for that sync hop pulse being coupled to the Kalman filter operator 303. Likewise, a respective frequency error detector, Frequency i, of the timing and frequency error detection subsystem 305, is operative to conduct frequency error measurements on a given ith one of N sync hop pulses, with the value $f_{ERRi}$ the frequency error measurement being coupled to the frequency error fusion operator 306.

Frequency error fusion operator 306 performs maximum likelihood (ML)-based fusion of frequency (velocity) measurement data, in order to exploit the availability, from multiple sensors (frequency error detectors 1-N), of information that represents the same types of measurements (e.g., Doppler). Kalman filter operator 303 accepts these measurements and converts the time and frequency errors into equivalent pseudo-range and pseudo-velocity. Between measurement cycles, the Kalman filter extrapolates pseudo-range, pseudo-velocity and acceleration state variables, so that, when measurement updates are available, the Kalman filter will update its estimates to the minimum mean square error (MMSE) optimum value.

Filter state variables of pseudo-range, pseudo-velocity, and acceleration are directly converted to timing and frequency error control signals, which are employed to update the demodulator 301, which then drives frequency and time errors to zero for each signal, to minimize bit error rate. Control signals are derived by using linear blending, as prescribed by Kalman filter equations, of measured state variables (i.e., pseudo-range, pseudo-velocity, and acceleration) and predicted measurements of state variables at a given time, and the current state estimate from the Kalman filter.

Now, although a communication system employing the Kalman filter-based time/frequency tracker (TFT) module of the '868 application is capable of performing time and frequency acquisition and tracking in the presence of kinematic variations, still, in order to do so successfully, it's view of the satellite must not be substantially impaired (e.g., visually obstructed). Unfortunately, such an unobstructed view cannot be guaranteed in every environment in which the receiver may be used. One issue related to obstruction is that the reception system might become overly sensitized (e.g., AGC - automatic gain control - is increased) allowing numerous "false detects" to occur. The "false detects" would be accepted as valid measurements of time and frequency error and subsequently "de-tune" the reception system.

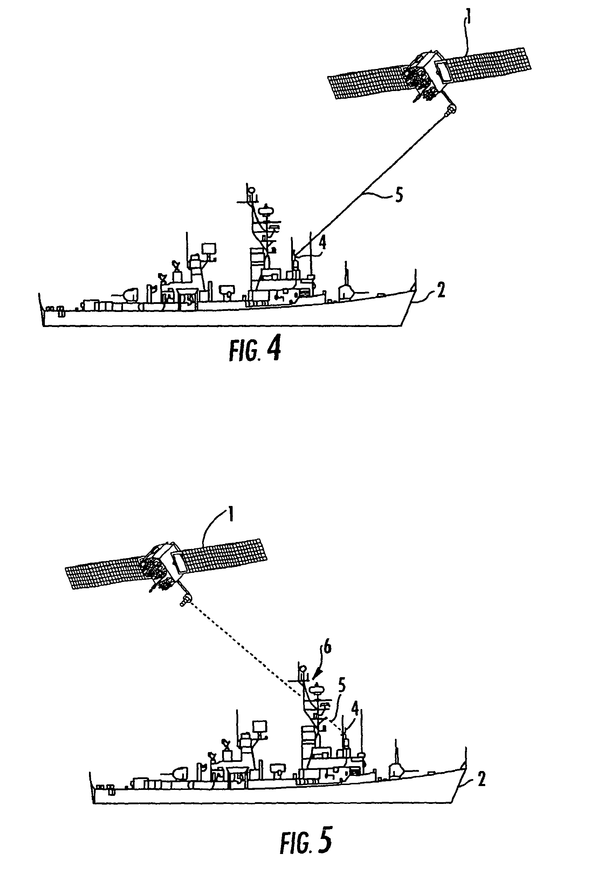

As a non-limiting example, as diagrammatically illustrated in Figure 4, the receiver terminal's antenna 4 may be mounted on a location of a dynamic platform, such as at the bow of a ship 2, that initially has an essentially clear (unobstructed) view (boresight 5) to the transmitter (satellite 1 having some elevation and azimuth relative to the ship's heading). However, as shown in Figure 5, that view may change (and be subject to obscuration) - for example, as a result of a change in the ship's heading that places the ship's superstructure 6 in the path of the boresight 5 to the satellite 1. As another non-limiting example, a modification of the ship's superstructure adjacent to where the antenna is mounted may cause the antenna's view of the satellite to be blocked. As is standard practice, an AGC subsystem on the blocked aperture would increase gain until detection is declared. Unfortunately, in this case, the detections are noise-only, and hence provide no time/frequency information, and will serve only to mis-adjust the reception system.

In accordance with the present invention, this obscuration problem is effectively circumvented by employing a spatially diverse antenna arrangement, that places multiple antennas at spaced apart locations affording different views of the transmitter (satellite), in combination with a reduced complexity, (view of the transmitter obscuration) 'information' or 'knowledge'-aided mechanism to select which one of these spatially diverse antennas is to be used by the receiver to receive downlink communication signals from the satellite.

Such a visibility obscuration-based function may comprise a two-dimensional (e.g., elevation (EL) and azimuth (AZ)) spatial map of quantized visibility values. In such a map, at (EL and AZ) spatial locations where antenna visibility to the transmitter (e.g., satellite, cell tower, and the like) is unobscured, the quantized visibility value may be set at a prescribed ('clear view') value (e.g., unity), representative of the fact that the antenna has an unobstructed view of the transmitter. As a consequence, if that antenna is currently being employed by the receiver terminal to downlink signals from the satellite, it may continue to be used for this purpose. On the other hand, at a spatial location where antenna visibility to the transmitter (satellite) has been measured to be obscured (e.g., owing to the presence of a physical object, such as a ship's superstructure), the quantized visibility value is set to a different value (e.g., zero), representative of the fact that the antenna cannot see the transmitter. In such a case, another antenna, whose quantized visibility map indicates that it has an obstructed view of the transmitter is selected by the receiver terminal. It is reasonable to allow various values in the continuum of zero to unity to indicate any conceivable obstruction condition from full obstruction to no obstruction.

Because the antennas are spatially diverse, their respective ranges to the satellite will differ (albeit slightly) - resulting in differences in times of arrival of signals downlinked thereto from the satellite. These differences in arrival times at the respective antenna, will, in turn, produce differences in timing and frequency error measurements that are used to update the demodulator's Kalman filter kinematic state vector. Such time of arrival differences, and resulting error measurement differences, are taken into account by performing timing and frequency error corrections, as necessary, based upon antenna boresight pointing data supplied from each antenna's positioning subsystem.

More particularly, antenna pointing information, together with knowledge of the spatial locations of the antennas, is used to generate geometric-based offsets between the receive apertures. These offsets are to be part of the correction when a switch or change-over between the antenna systems is effected, in response to an obscuration of the LOS of the currently employed antenna. As a result, whenever an antenna change-over takes place, timing and frequency measurement data derived from the downlinked signal being supplied from to the receiver terminal will be appropriately 'corrected' to account for the spatial diversity, and thereby maintain its Kalman filter-based time and frequency tracker module 'in-sync' with the transmitter (satellite). The system also has provision for non-geometric corrections such as cable length differentials between the antenna feeds to a common reference point. This is a static time-base correction and is independent of LOS to the satellite.

Transitions between the unobscured and obscured regions of the spatial may have 'intermediate' quantized values that fall between those representative of the unobscured and obscured regions. Where the antenna's boresight to the transmitter intercepts such transition regions, if there is another antenna, whose quantized visibility map indicates that it has an obstructed view of the transmitter, that other antenna would be selected by the receiver terminal. However, if the boresight to the transmitter for each antenna intercepts a transition region, an alternative arbitration mechanism, such as, but not limited to, length of time in a given state or whether the previous state indicates that the antenna boresight had been in an obscured region, but was transitioning to an unobscured region, may be used to select which antenna is to be used. In an optimally configured system, the number of antennas and their associated visibility maps are such that, even though each antenna may experience some degree of blockage, a composite of the obscuration maps for all of the antennas will be effective to provide complete hemispherical coverage.

Figure 1 diagrammatically illustrates a non-limiting, reduced complexity, example of a satellite communication (SATCOM) system of the type described in the above-referenced '868 application;

Figure 2 is a pictorial diagram illustrating kinematic variables in the satellite communication system of Figure 1;

Figure 3 diagrammatically illustrates the overall architecture of a satellite receiver terminal, including a front end demodulator and Kalman filter-based time/frequency tracker (TFT) module disclosed in the '868 application;

Figure 4 diagrammatically illustrates the manner in which a receiver terminal antenna, that is supported in the vicinity of the bow of a ship, has an essentially unobstructed view to a satellite for a first heading of the ship;

Figure 5 diagrammatically illustrates the manner in which the view to the satellite by the shipboard receiver terminal antenna of Figure 4 is obstructed by the superstructure of the ship for a second heading of the ship;

Figure 6 diagrammatically illustrates the application of the present invention to the shipboard environment of Figures 1-5, wherein a pair of spatially diverse receiver terminal antennas, that are respectively supported in the vicinities of the bow and stem of a ship, have respectively different visibility obstructions relative to a satellite;

Figures 7 and 8 are non-limiting examples of two-dimensional (azimuth and elevation) spatial modulation maps of quantized visibility obscuration values such as may be associated with respective ones of the spatially diverse shipboard antennas of Figure 6;

Figure 9 shows a table illustrating a non-limiting example of criteria for selecting which antenna output of the system of Figure 6 is to be coupled to the receiver terminal's demodulator.

Figure 10 diagrammatically illustrates the geometry relationship among spatially diverse signal receiving apertures (antennas) relative to a remote transmitter (satellite);

Figure 11 diagrammatically illustrates the geometry relationship between a pair of spatially diverse antenna locations and a remote transmitter that has different transmitting locations relative to the antennas; and

Figure 12 diagrammatically illustrates non-parallel line of sight and parallel line-modeled line of sight geometry relationships between spatially diverse antennas and a remote transmitter.

Before describing, in detail, the structure and operation of the 'knowledge'-aided antenna selection mechanism in accordance with the present invention, it should be observed that the invention resides primarily in a prescribed arrangement of conventional communication signal collection, processing circuits and components, and supervisory digital control circuitry that controls the operations of these circuits and components, and not in the details thereof Consequently, in the drawings, such circuits and components, and the manner in which they are interfaced with various communication equipments have, for the most part, been illustrated by readily understandable block diagrams, which show only those specific details that are pertinent to the present invention, so as not to obscure the disclosure with details which will be readily apparent to those skilled in the art having the benefit of the description herein. Thus, the diagrammatic illustrations are primarily intended to show the respective functionalities and operational effects of the various components of the invention in convenient functional groupings, so that the present invention may be more readily understood.

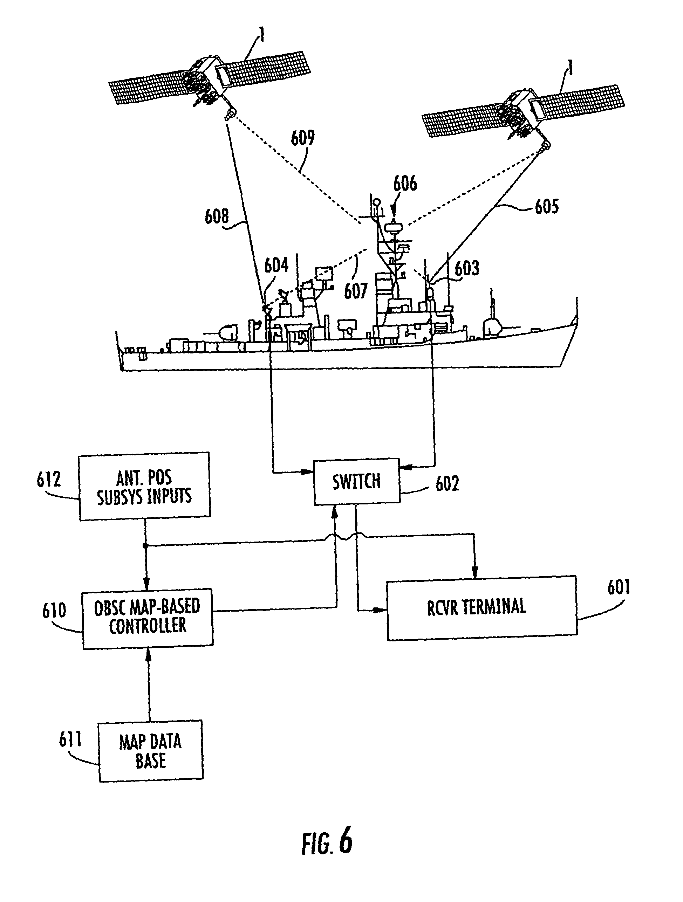

Attention is now directed to Figure 6, which diagrammatically illustrates a non-limiting example of the spatially diverse antenna arrangement and associated 'obscuration knowledge'-aided antenna selection mechanism of the present invention. In particular, Figure 6 depicts the incorporation of the invention into the shipboard environment of Figures 4 and 5. As shown therein, rather than being coupled to a single antenna, the receiver terminal 601 (which may correspond to that disclosed in the '868 application) is coupled by way of an antenna feed selection switch 602 to a plurality of spatially diverse receiver terminal antennas. In order to reduce the complexity of the Figure, the illustrated embodiment shows a pair of spaced apart antennas 603 and 604. It is to be noted that the invention is not limited to this or any particular plural number of antennas. What is necessary is that there be plural antennas having respectively different views and associate differing visibility obscurations of the transmitter. In the illustrated example antennas 603 and 604 are respectively supported in the vicinities of the bow and stem of the ship 2, and have respectively different visibility obstructions relative to satellite 1. For the ship heading shown, bow-associated antenna 603 has a relatively unobscured, or clear, view of the satellite 1 along a boresight axis, shown by solid line 605, while the ship's superstructure 606 impairs the line of sight, shown by broken lines 607, from stem-associated antenna 604 to the satellite 1. In the situation where the ship's heading is reversed to that shown in Figure 6, stem-associated antenna 604 will have a relatively unobscured, or clear, view of the satellite 1 along a boresight axis, shown by solid line 608, while the ship's superstructure 606 will impair the line of sight, shown by broken lines 609, from bow-associated antenna 603 to the satellite 1.

In accordance with the invention, the antenna selection switch 602 is operative, under the control of a visibility (to-the-transmitter) obscuration map-based controller 610, to selectively couple the input to the receiver terminal's front end demodulator unit to whichever one of the antennas has been determined to have the 'best' view of the satellite, based upon an examination of the obscuration maps of all the antennas. For this purpose, controller 610 contains or is coupled to an antenna boresight obscuration database 611. Controller 610 is also coupled to monitor the boresight pointing parameters supplied by the antennas' positioning subsystems 612.

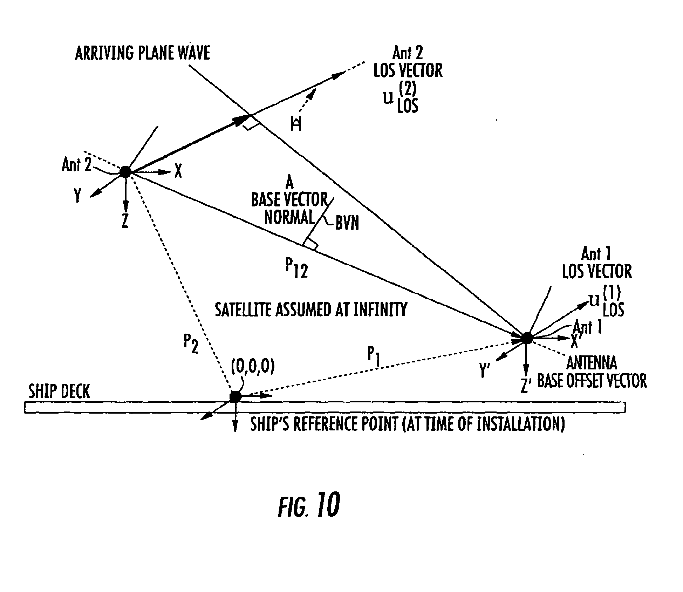

The antenna boresight pointing data supplied from the antenna positioning subsystems are also supplied to the receiver terminal 601, in order to enable the receiver terminal to derive the spatial diversity-based offsets, through which timing and frequency measurement data derived from downlinked signals received by an antenna other than the one currently being employed may be 'corrected', when switching to that other antenna, so as to maintain the receiver 'in-sync' with the satellite. The manner in which these spatial diversity-based offsets are derived will be detailed below with reference to Figures 10-12.

The derivation of the geometric-based correction is best understood as described below. The manner in which the spatial diversity-based correction values are derived by the terminal 601 may be readily understood by an examination of the geometry diagram of Figure 10, which shows the spatial relationship among the antennas and the satellite. In Figure 10, the antennas 603 and 604 of the shipboard environment example of Figure 6 are respectively denoted as antennas Ant1 and Ant2, whose spatial locations of a local reference coordinate system on the ship have respective coordinates (X',Y',Z') and (X,Y,Z), relative to some reference (origin) location (0,0,0), for example a prescribed point on the ship's deck.

As such, a first antenna position vector $p_1$ may be defined between the reference location and antenna Ant1, a second antenna position vector $p_2$ may be defined between the reference location and antenna Ant2, and a base offset vector $p_{12}$ may be defined between antenna Ant1 and antenna Ant2. Also, a first LOS vector $u_{LOS}^{(1)}$ may be defined between antenna Ant1 and the satellite, while a second LOS vector $u_{LOS}^{(2)}$ may be defined between antenna Ant2 and the satellite. Additionally shown in Figure 10 is the intersection of a line, denoted as a base vector normal (BVN), which extends from the satellite and orthogonally intersects the offset vector $p_{12}$. Further illustrated is a line PW, which represents a plane wave that has been emitted by the satellite, at the time that the signal impinges upon antenna Ant1, but has not yet arrived at antenna Ant2, due the fact that antenna Ant2 is farther away from the satellite than antenna Ant1. For the geometry diagram of Figure 10, the following spatial conditions may be defined.

For a given antenna, all gimbal axes (for a particular antenna) intersect at a common point, which is assumed to be the origin of the base coordinate system.

The unit vector components are assumed "pre-corrected" by good installation practices and have biases removed. Hence we assume that the 1) x-y planes describing each base (i.e., antenna) coordinate system form parallel planes, 2) the x-axes between base coordinate systems are parallel, and 3) the other axes of the base coordinate systems are parallel and aligned in the directions of the ship's reference system (i.e., x-axes parallel to the bow, y-axes out the starboard side, z-axes down toward "center of earth") - otherwise, the two LOS vectors are not "in" the same reference system, as the offset vector $P_{12}$ and a dot product would be meaningless, since two vectors to be "dotted" must be defined using a common coordinate system.

It may be noted that $\mathbf{p}_{12} \cdot \mathbf{u} = (\mathbf{p}_1 - \mathbf{p}_2) \cdot \mathbf{u} = \mathbf{p}_1 \cdot \mathbf{u} - \mathbf{p}_2 \cdot \mathbf{u}$, and for the individual products to make sense a common co-ordinate frame (with the exception of translation) is required). In practice the LOS vectors are, to a good approximation parallel with respect to either base coordinate frame (i.e., angular offsets are negligible).

Continuing with the non-limiting ship example, the actual ship's reference point need not be fixed, but simply known (at some time prior to acquisition) so that the base offset vector $p_{12}$ can be computed. Further, let us assume that antenna Ant 1 is the reference antenna for range lead and range rate measurements.

As noted above, the axes attached to the antenna bases define a local reference coordinate system, using the respective base coordinate systems. The local base systems have their origins defined using the ship's reference point (origin: (0,0,0)). The exact components of the origins in the ship reference system are not necessary; all that is required is the vector difference (i.e., the antenna base offset vector), for computation of the predicted terminal aperture range and range-rate offset.

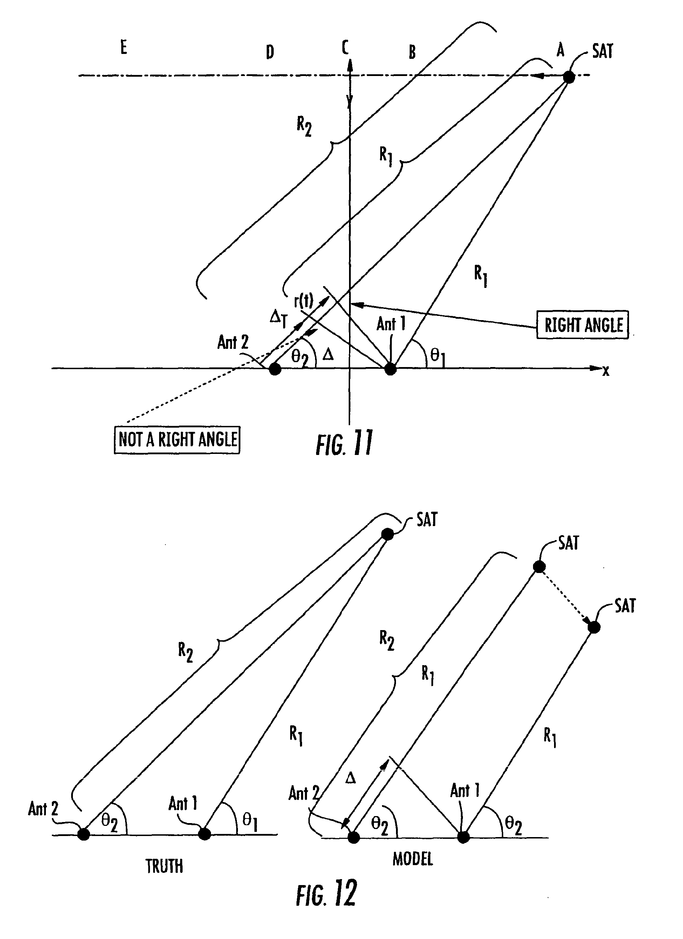

As will be detailed below with reference to Figures 11 and 12, line of sight (LOS) vectors from each antenna to the satellite may validly assumed to be parallel in the ship's reference system, even considering the closest approach of any satellite and the maximum distance between bases. The coordinates of the line of sight vectors are normalized to provide a unit length. By virtue of the alignment (i.e., physical antenna pedestal/base installation and bias removal processing) of the antennas' coordinate systems, their unit LOS vectors are essentially defined within a common global frame (i.e., ship reference frame) and the local frames are co-aligned, such that the components of each vector in each antenna's base coordinate system can be directly applied in the other antenna's coordinate system without any transformation.

The manner in which the correction processor computes the range lead or differential $\Delta$ of antenna Ant1 relative to antenna Ant2 is as follows.

As set forth above, and shown in Figure 10, the base offset vector $p_{12}$ is defined as:

$$\mathbf{p}_{12} = \mathbf{p}_1 - \mathbf{p}_2 \ \text{(computed in the ship reference frame)}$$

The geometric range lead (e.g., shorter path length to satellite) of antenna Ant1 with respect to antenna Ant2 (a greater lead is a more positive value of $\Delta$) with the LOS unit vector given in either antenna Ant2's base coordinates or the ship reference coordinates (e.g., angular errors are negligible), may be expressed as:

$$\Delta \ = \frac{\mathbf{p}_{12} \bullet \mathbf{u}_{LOS}^{(2)}}{\left\|\mathbf{u}_{LOS}^{(2)}\right\|} = \mathbf{p}_{12} \bullet \mathbf{u}_{LOS}^{(2)} = \left\|\mathbf{p}_{12}\right\|\left\|\mathbf{u}_{LOS}^{(2)}\right\| \cos(\theta_{up_{12}}) = \left\|\mathbf{p}_{12}\right\| \cos(\theta_{up_{12}}) = \Delta_{12}$$

The predicted range correction depends on which antenna is providing the measurement and which antenna is blocked. The geometrically predicted range correction may be defined by the following Table 1.

TABLE 1

| Measurement Antenna | Blocked Antenna | Geometric Range Lead $\Delta$ (Measurement) | Geometric Range Correction for Blocked Antenna | Comments (Antenna Ant1 is assumed to be closer to the satellite) |
|---|---|---|---|---|
| Ant1 | Ant2 | $\Delta_{12}$ >= 0 | $\Delta_{12}$ | Ant1 is geometrically 'earlier' than Ant2. Effect: adds path length for ANT2 |
| Ant1 | Ant2 | $\Delta_{12}$ < 0 | $\Delta_{12}$ | Ant2 is geometrically 'earlier' then Ant1. Effect: subtracts path length for Ant2 |
| Ant2 | Ant1 | $\Delta_{12}$ >= 0 | $-\Delta_{12}$ | Ant1 is geometrically 'earlier' than Ant2. Effect: subtracts path length for Ant1 |
| Ant2 | Ant1 | $\Delta_{12}$ < 0 | $-\Delta_{12}$ | Ant2 is geometrically 'earlier' than Ant1. Effect: adds (positive) path length for Ant1 |

Notes:

- A negative lead is a positive lag.

- Comments (last column) are for reference only when Ant1 is closer to the satellite than ANT2.

- Corrections are proper regardless of orientation and naming convention of the antennas.

- Geometric range lead requires knowledge of **u** and $\mathbf{p}_{12}$

The end result is that when the geometric range lead measurements are derived from (unblocked) antenna Ant2, the sign is inverted, otherwise (i.e., when antenna Ant1 is unblocked), the sign is left unaltered.

Lastly, if there is an installation (path length) difference L between the path length for antenna Ant2 and antenna Ant1, namely:

$$\texttt{L = path length for Ant2 - \ path length for Ant1}$$

then, the ranges between the apertures are related by:

$$\mathbf{R_2 \ = \ R_1 \ + \ \Delta_{12} \ + \ L}$$

It should be noted that the above ranges are not necessarily the range states carried in the Kalman filter, as the former relate to actual propagation paths. The Kalman range states are modified with time-updates converted to range corrections (e.g., scaling by the speed of light). The range offset term involving $\Delta_{12}$ and L is true, but the Kalman state for range is not used in slaving one demodulator to another - it is the actual time offsets that are used. Physically, the range states are meaningful within a demodulator only as differences over time for adjustments in a no-slaving condition. However, as mentioned the range offset term involving $\Delta_{12}$ and L give a good approximation to the timing offset needed to compensate a blocked path.

The range rate offset $\dot{\Delta}$ induced by the antenna placement geometry may be determined by differentiating the above vector dot products, namely:

$$
\begin{aligned}
\dot{\Delta} \ &= \ \frac{1}{\left\|\mathbf{u}_{LOS}^{(2)}\right\|}\left(\dot{\mathbf{p}}_{12}\cdot\mathbf{u}_{LOS}^{(2)}+\mathbf{p}_{12}\cdot\dot{\mathbf{u}}_{LOS}^{(2)}\right) \\[2mm]
&= \ \frac{1}{\left\|\mathbf{u}_{LOS}^{(2)}\right\|}\left(0+\left\|\dot{\mathbf{u}}_{LOS}^{(2)}\right\|\left\|\mathbf{p}_{12}\right\|\cos(\theta_{\dot{u}p_{12}})\right) \\[2mm]
&= \left\|\dot{\mathbf{u}}_{LOS}^{(2)}\right\|\left\|\mathbf{p}_{12}\right\|\cos(\theta_{\dot{u}p_{12}}) \ = -\left\|\mathbf{p}_{12}\right\|\sin(\theta_{up_{12}})\dot{\theta}_{up_{12}} \ = \dot{\Delta}_{12}
\end{aligned}
$$

Therefore,

$$\dot{R}_2 = \dot{R}_1 + \dot{\Delta}_{12} + \dot{L} = \dot{R}_1 + \dot{\Delta}_{12}$$

The offset $\dot{\Delta}_{12}$ is the (total) range-rate difference, defined as antenna Ant2's LOS range rate minus antenna Ant1's range rate, due to geometric considerations on the LOS due to all motion (i.e., three degrees of freedom translation and six degrees of freedom micro-motion) components.

The required frequency compensation may be derived as follows:

$$f_{LOS\_offset} = -\dot{\rho}\,\frac{f_o}{c}$$

In the above expression, the negative sign is due to the Doppler shift (relative to a nominal freq or freq on the unblocked antenna) required for an opening $\dot{\Delta}_{12} > 0$ and closing $\dot{\Delta}_{12} < 0$ motion relative to the satellite. The range rate correction may be defined by the following Table 2.

TABLE 2

| Measurement Antenna | Blocked Antenna | Geometric Range Rate (Computed) | Geometric Range Rate Correction for Blocked Antenna | Comments |
|---|---|---|---|---|
| Ant1 | Ant2 | $\dot{\Delta}_{12} >= 0$ | $\dot{\rho} = \dot{\Delta}_{12}$ | Ant2 geometrically opening its range to satellite with respect to Ant1. Effect: Commands a lower frequency for Ant2 than Ant1 |
| Ant1 | Ant2 | $\dot{\Delta}_{12} < 0$ | $\dot{\rho} = \dot{\Delta}_{12}$ | Ant2 geometrically closing its range to satellite with respect to Ant1. Effect: Commands a higher frequency for Ant2 than Ant1 |
| Ant2 | Ant1 | $\dot{\Delta}_{12} >= 0$ | $\dot{\rho} = -\dot{\Delta}_{12}$ | Ant2 geometrically opening range to the satellite with respect to Ant1. Effect: Commands a higher frequency for Ant 1 than Ant2 |
| Ant2 | Ant1 | $\dot{\Delta}_{12} < 0$ | $\dot{\rho} = -\dot{\Delta}_{12}$ | Ant2 geometrically closing range to the satellite with respect to Ant1. Effect: Commands a lower frequency for Ant than Ant2 |

Notes:

- A negative rate of change in range (i.e., closing or decreasing distance) induces an 'up'-shifted frequency (i.e., positive Doppler).

- Comments (last column) are for reference only, when Ant1 is closer to the satellite than Ant2.

- Corrections are proper regardless of orientation and naming convention of antennas.

- Geometric range rate requires knowledge of **u** and $\mathbf{p}_{12}$

In order to estimate the geometrically induced range-rate of change, the time derivative of the LOS unit vector is needed. In the present example, this is not directly available. Hence it requires the use of a numerical approximation. A non-limiting example of such an approximation is:

$$\dot{\mathbf{u}}_{LOS}^{(2)} = \frac{d}{dt}\dot{\mathbf{u}}_{LOS}^{(2)} = \frac{du_x}{dt}\mathbf{i} + \frac{du_y}{dt}\mathbf{j} + \frac{du_z}{dt}\mathbf{k}$$

$$= \lim_{\Delta t \longrightarrow 0} \frac{u_x(t_0+\Delta t)-u_x(t_0)}{\Delta t}\mathbf{i} + \frac{u_y(t_0+\Delta t)-u_y(t_0)}{\Delta t}\mathbf{j} + \frac{u_z(t_0+\Delta t)-u_z(t_0)}{\Delta t}\mathbf{k}$$

$$\approx \frac{u_x(t_0+\Delta t)-u_x(t_0)}{\Delta t}\mathbf{i} + \frac{u_y(t_0+\Delta t)-u_y(t_0)}{\Delta t}\mathbf{j} + \frac{u_z(t_0+\Delta t)-u_z(t_0)}{\Delta t}\mathbf{k}$$

A principal feature is that the time order of the unit LOS vectors can be component-wise differenced to produce an estimate of the range-rate vector. This is a reasonable approximation, as the LOS vectors are part of accelerometer measurement data, referred previously (which may be provided at nominally 10 ms intervals, for example, which is considerably shorter than micro-motion effects). The LOS vectors are assumed available from the antenna pointing unit control hardware.

The differentiation shown above may be defined by a three-point (end difference) formula. The value of this approach is that no pre-filtering on the LOS vectors is needed prior to the derivative computation. Also, such a three-point formula provides some measure against "noise spikes" by increasing (doubling) the timebase for slope computation (versus simply differencing successive measurements), while not introducing a lag in computation. Of the finite difference formulations available, we propose the end difference formula because it provides the most recent estimate of the derivative using all the data currently available. This serves to maintain a "current value" (e.g., no more than 10 ms old, assuming the data arrives on nominally 10 ms intervals.

The three-point right-end difference (Kreyzig, Advanced Engineering Mathematics, 5th ed, Chapter 19) formula is given by:

$$f'(x_k) = \frac{1}{2h}\left(3f(x_k)-4f(x_k-h)+f(x_k-2h)+\frac{h^2}{3}f^{(3)}(\xi)\right) \quad 0 \le \xi \le 2\mathrm{h}$$

Therefore, to approximate the first-derivative of the function $f$ at the point $x_k$, samples spaced at $h = \Delta t = 10$ ms are used, resulting in:

$$f'(x_k) \approx f_k = \frac{1}{2h}\left(3f_k-4f_{k-1}+f_{k-2}\right)$$

In the course of executing the geometric projection calculators, described above, the following should be noted.

As pointed out above, the range difference $\Delta$ and the range rate difference $\dot{\Delta}$ are computed based upon the assumption that the LOS vectors from the antennas to the satellite are mutually parallel from the antennas to the satellite. That this assumption is valid may be appreciated from the geometry diagrams of Figures 11 and 12, as follows.

First, it should be recognized that the LOS vectors are not truly parallel, because the antennas are pointed to the same location in three-dimensional space. However, because the range to the aim-point (satellite) overwhelmingly dominates the separation between the antennas, for all possible satellite positions (e.g., A, B, C, D, E, shown in Figure 11), through geometric analysis, it can be shown that the individual LOS vectors can be very well modeled as parallel.

More particularly, the true relative range difference $\Delta_T$ (note the orthogonal projection in Figure 11) and relative range-rate difference $\dot{\Delta}_T$ can be expressed as follows, where subscripts 1 and 2 are associated with antennas Ant' 1 and Ant2, respectively:

$$R_2(t) = \Delta_T(t) + R_1(t) = \Delta(t) - r(t) + R_1(t)$$

$$\dot{R}_2(t) = \dot{\Delta}_T(t) + \dot{R}_1(t) = \dot{\Delta}(t) - \dot{r}(t) + \dot{R}_1(t)$$

$$\theta_1(t) \neq \theta_2(t)$$

$\Delta(t)$ is the orthogonal projection of the baseline separation onto the path between antenna Ant2 and the satellite. The term r(t) is due to the "overlap" of the length $R_1$ (on the $R_2$ path) and the orthogonal projection (on the $R_2$ path). This overlap is caused by the different elevation angles for antenna Ant1 and antenna Ant 2 to the satellite. The overlap $r(t)$ is generally much smaller than $\Delta(t)$ and, under the modeling assumption of parallel LOS vectors, r(t) = 0. When the range to the satellite is large compared to the antenna separation, r(t) approaches 0 (as the LOS vectors become more parallel), but $\Delta(t)$ need not go to zero. On the basis of this parallel LOS assumption (and using antenna Ant 2 as "defining" the elevation angle), the geometry may be redrawn as shown in Figure 12, which shows "true" (non-parallel) LOS vectors, and a "parallel" model.

In the parallel LOS diagram of Figure 11, antenna Ant 1 could equivalently have been chosen to define the elevation angle; in that case, the geometry would have the LOS of antenna Ant2 "pitched higher" to be parallel with the LOS of antenna Ant1.

From elementary mathematical manipulations (assuming parallel LOS vectors) the modeled path length and range-rate differences are:

$$\Delta = \mathbf{p}_{12} \bullet \mathbf{u}_2 = \left\| \mathbf{p}_{12} \right\| \left\| \mathbf{u}_2 \right\| \cos(\theta_2(t)) \quad \text{- Result of orthogonal projection}$$

$$\dot{\Delta} = \mathbf{p}_{12} \bullet \dot{\mathbf{u}}_2 = -\left\| \mathbf{p}_{12} \right\| \left\| \mathbf{u}_2 \right\| \sin(\theta_2(t)) \frac{d\theta_2}{dt} = -\left\| \mathbf{p}_{12} \right\| \sin(\theta_2(t)) \frac{d\theta_2}{dt}$$

To verify these results, the modeled range-rate difference $\dot{\Delta}$ may be expressed as:

$$\dot{\Delta} = \mathbf{p}_{12} \bullet \dot{\mathbf{u}}_2 = -\left\| \mathbf{p}_{12} \right\| \left\| \mathbf{u}_2 \right\| \sin(\theta_2(t)) \frac{d\theta_2}{dt} = -\left\| \mathbf{p}_{12} \right\| \sin(\theta_2(t)) \frac{d\theta_2}{dt} \, ,$$

where $\theta_2$ is the reference angle for defining the parallel direction. This methodology uses the parallel LOS approximation, with the implication that the path length difference is due only to the orthogonal projection of the separation, and that there is no elevation angle difference between the antennas, and near broadside with large range (i.e., $y_o \gg \left\| \mathbf{p}_1 - \mathbf{p}_2 \right\|$) where $\theta_2 \approx \pi/2$.

As geometric range offset (timing correction) values and geometric range rate (frequency) correction values are periodically (e.g., at the above exemplary rate of 100 Hz (or every 10 ms)) derived by the error correction processor in the terminal 601 in the manner described above with reference to Figures 10-12, the error correction processor uses these values to controllably correct timing and frequency error measurements that it receives from each demodulator, to produce a set of 'corrected' timing and frequency error measurements which it makes available to the kinematic state estimate processor of the Kalman filter. As described above, this allows the demodulator, whose ability to receive signals downlinked from the satellite may be impaired (e.g., as in the case of a superstructure blockage of the slave demodulator's antenna's field of view) on one or more apertures, to maintain its Kalman filter-based time and frequency tracker module 'in sync' with the transmitter.

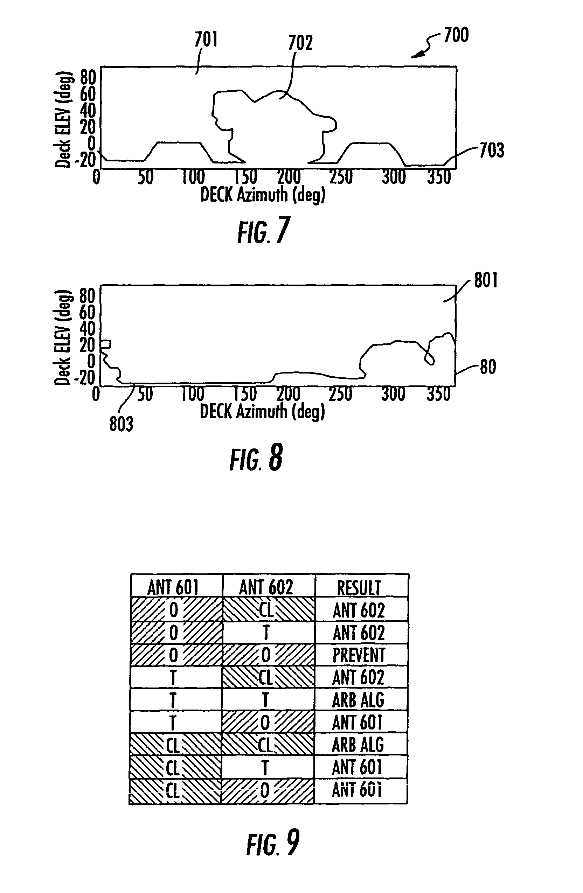

Returning to the issue of boresight obscuration, the antenna boresight obscuration database 611 comprises a library of visibility obscuration-based look-up tables, respectively representative of two-dimensional (e.g., elevation (EL) and azimuth (AZ)) spatial maps of quantized visibility values. In each map, non-limiting examples of which are respectively shown at 700 and 800 in Figures 7 and 8, at (EL and AZ) spatial locations where antenna visibility to the transmitter (e.g., satellite, cell tower, and the like) is unobscured, the quantized visibility value may be set at a prescribed ('clear view') number (e.g., unity), representative of the fact that, when its boresight has those (AZ, EL) coordinates, the antenna will enjoy an effectively unobstructed view of the transmitter (e.g., satellite).

In the visibility obscuration map examples of Figures 7 and 8, regions 701 and 801, respectively, are comprised of such'clear view' quantized values. On the other hand, at spatial locations where antenna visibility to the transmitter has been measured to be obscured (e.g., owing to the presence of a physical object, such as a ship's superstructure), the quantized visibility value is set to a different number (e.g., zero), representative of the fact that the antenna cannot see the transmitter. In the obscuration map examples of Figures 7 and 8, regions 702 and 802, respectively, contain such 'obscured' view' quantized values.

Maps 700 and 800 further show relatively spatially narrow transition regions 703 and 803, that lie between or interface the unobscured and obscured regions 701-702 and 801-802, respectively. Within these transition regions, the quantized obscuration values may be set at 'intermediate' numbers that fall between those of the unobscured and obscured regions. These transition regions are used to indicate that the boresight of the antenna is pointed in a direction associated with a 'transition' between a relatively clear view region (701, 801) and a substantially obstructed view region (702, 802). If the antenna had been previously pointed in a direction having a clear view of the satellite, it may be reasonably inferred that encountering a transition region means that the further positioning of the antenna along its current direction of movement will likely cause its view of the satellite to be obscured (as the antenna boresight 'transitions' to the obscuration region). Conversely, if the antenna had been previously pointed in a direction having an obstructed view of the satellite, it may be reasonably inferred that encountering a transition region means that the further positioning of the antenna along its current direction of movement will likely cause its view of the satellite to become unobscured (as the antenna boresight 'transitions' to a clear view region). As will be described, these transition regions allow the controller 610 to arbitrate among potential steering paths through the antenna feed switch 602.

A non-limiting example of criteria by way of which antenna feed switch controller 610 selects the feed path through switch 602 is shown by the table of Figure 9, which lists visibility conditions for antennas 603 and 604, and the result (which antenna's output is to be coupled through switch 602) of those conditions. The identifier 'O' denotes that the coordinates of antenna's boresight fall within an obscuration region of that antenna's map, while the identifier'CL' denotes that the antenna's boresight view of the transmitter (satellite) is unobscured or clear. The identifier'T' denotes that the antenna's boresight coordinates fall within a transition region of the antenna's map.

As pointed out above, because antennas 603 and 604 are spatially diverse, their respective ranges to (and thereby times of reception of signals downlinked from) the satellite will differ. This differential time of arrival of downlinked signals from the satellite produces differences in the timing and frequency error measurements that are used to update the receiver's Kalman filter kinematic state vector. Such time of arrival differences and resulting error measurement differences are taken into account, by performing timing and frequency error corrections, as necessary, based upon antenna boresight pointing data supplied from the antenna positioning subsystems 612.

In operation, antenna feed switch controller 610 continuously compares the respective sets of (AZ, EL) boresight parameters supplied by the antenna positioning subsystems 612 with the contents of their associated visibility obscuration maps within database 611. As long as the coordinates of the antenna currently being coupled by antenna feed selection switch 602 to the receiver terminal 602 fall within a clear region of its associated visibility-obscuration map, controller 610 may continue to feed the output of that antenna through switch 602 to the receiver terminal 601. It should be noted that the other antenna may simultaneously have a clear view to the satellite. In this case, it is not necessary that the current antenna be used, but that an arbitration algorithm, such as those described below, may be used to select which of the two antennas is to be used, as denoted in Figure 9.

For the example depicted in Figure 6, as long as the heading of ship 2 continues in the direction shown, bow-associated antenna 603 should continue to have an unobstructed view of the satellite 1, so that its output may be coupled by way of switch 602 to the receiver terminal 601. However, if the boresight of the antenna currently being coupled by the antenna feed selection switch 602 to the receiver terminal 601 falls within an obscuration region of its associated visibility-obscuration map, controller 610 will cause the antenna feed path through switch 602 to change to another antenna, whose quantized visibility map indicates that it has an unobstructed or clear view of the transmitter is selected by the receiver terminal.

Thus, in the example depicted in Figure 6, if the ship 2 reverses course, bow-associated antenna 603 will no longer have an unobstructed view of the satellite 1, due to the presence of ship's superstructure 606, which obscures that antenna's line-of-sight 609, as described above. In this case, the (AZ, EL) coordinate data supplied by the antenna positioning subsystem for antenna 603 will fall within an obscuration region of that antenna's obscuration visibility map, indicating to controller 610 that the path through antenna feed switch 602 needs to be changed. To this end, the stem-associated antenna 604 will now have a relatively unobscured, or clear, view of the satellite 1 along boresight axis 608, so that the (AX, EL) coordinate data supplied by the positioning subsystem for antenna 604 will now fall within a clear view region of that antenna's obscuration visibility map, indicating to controller 610 that the path through antenna feed switch 602 may be changed from bow-associated antenna 603 to stem-associated antenna 604.

As noted above, there may arise a situation, where the boresight of the antenna whose output is currently being coupled through feed switch 602 intersects a transition region of that antenna's visibility obscuration map, whose quantized value is less than that of an unobscured or clear region. If the (AZ, EL) coordinates of the boresight of another antenna fall within the unobscured region of that other antenna's visibility obscuration map, controller 601 will change the feed path through switch 602 to that other antenna. However, if the (AZ, EL) coordinates of the boresight to the transmitter of another antenna fall within an obscured region of that other antenna's visibility obscuration map, controller 610 will not change the feed path through switch 602 to that other antenna, but will maintain the path through switch 602 to the current antenna. If the (AZ, EL) coordinates of the boresight to the transmitter of no other another antenna fall within the unobscured region of that other antenna's visibility obscuration map, but fall within a transition region of that map, controller 601 will determine whether a changeover to another antenna is take place based upon one or more prescribed criteria.

Such criteria may take into account whether the currently used antenna has been pointed in a direction having a clear view of the satellite. In such a case, it may be reasonably inferred that encountering a transition region means that the further positioning of the antenna along its current direction of movement will likely cause its view of the satellite to be obscured (as the antenna boresight 'transitions' to the obscuration region). In this case, the controller 610 may cause a changeover to another antenna whose boresight also falls within a transition region. However, that changeover decision may also take into account the other antenna's previous pointing direction. If the other antenna has been pointed in a direction having an obstructed view of the satellite, it may be reasonably inferred that further positioning of the other antenna along its current direction of movement will likely cause its view of the satellite to become unobscured (as the other antenna's boresight 'transitions' to the clear region). In this case, the controller 610 may cause a changeover to the other antenna.

On the other hand, if the other antenna had been previously pointing in a direction having an unobstructed view of the satellite, it may be reasonably inferred that the transition region for the other antenna means that the further positioning of the other antenna along its current direction of movement will likely cause its view of the satellite to become obscured. In this case, a changeover to the other antenna may not be effected. Controller 610 may also employ one or more alternative arbitration mechanisms for selecting between antennas whose boresights produce the same map values, such as, but not limited to, the length of time that switch 602 is in a given antenna feed state.

Preferably, as noted above, the number of antennas and their associated visibility maps are such that, even though each antenna may experience some degree of blockage, a composite of the obscuration maps for all of the antennas is effective to provide complete hemispherical coverage. Such a well designed system is characterized by the 'AVOID' result of Figure 9.

As will be appreciated from the foregoing description, the transmitter obscuration problem described above is effectively circumvented in accordance with the present invention, which not only employs spatial diversity, but uses a reduced complexity, (view of the transmitter obscuration) 'information' or 'knowledge'-aided antenna selection criterion to select which antenna is to be used by the receiver to receive downlink communication signals from the satellite.

**Claims**

1. An arrangement for receiving communication signals and coupling received communication signals to a receiver comprising:

   a plurality of spaced apart communication signal receptors which are operative to collect communication signals from a transmitter;
   a received signal coupler, coupled between said receptors and said receiver, and being controllably operative to couple communication signals from a selected one of said receptors to said receiver; and
   a controller, which is operative to control the operation of said received signal coupler in accordance with a prescribed relationship between first information representative of the signal reception directions of respective ones of said plurality of spaced apart communication signal receptors and second information representative of communication signal visibility obscuration of the ability of said respective ones of said plurality of spaced apart communication signal receptors to collect said communication signals from said transmitter.

2. The arrangement according to claim 1, wherein said second information is representative of a plurality of spatial communication signal visibility obscuration maps, contents of which are defined in terms of geometric coordinates of respective fields of view of said plurality of signal receptors.

3. The arrangement according to claim 2, wherein a respective spatial communication signal visibility obscuration map comprises a multidimensional array of quantized transmitter obscuration values defined in terms of geometric coordinates of respective fields of view of said plurality of signal receptors.

4. The arrangement according to claim 3, wherein said quantized transmitter obscuration values include first values representative of an effectively unobstructed view of said transmitter by a respective signal receptor, and second values representative of an effectively obstructed view of said transmitter by said respective signal receptor.

5. The arrangement according to claim 4, wherein said quantized transmitter obscuration values further include third values representative of a transition between a first region of said respective spatial communication signal visibility obscuration map containing said first values and a second region of said respective spatial communication signal visibility obscuration map containing said second values.

6. A method for receiving communication signals and coupling received communication signals to a receiver for processing thereby, said method comprising the steps of:

(a) providing a plurality of spaced apart communication signal receptors which are operative to collect communication signals from a transmitter; and
(b) controllably coupling communication signals from a selected one of said receptors to said receiver in accordance with a prescribed relationship between first information representative of the signal reception directions of respective ones of said plurality of spaced apart communication signal receptors relative to said transmitter, and second information representative of communication signal visibility obscuration of the ability of said respective ones of said plurality of spaced apart communication signal receptors to collect said communication signals from said transmitter.

7. The method according to claim 6, wherein said second information is representative of a plurality of spatial communication signal visibility obscuration maps, contents of which are defined in terms of geometric coordinates of respective fields of view of said plurality of signal receptors.

8. The method according to claim 7, wherein a respective spatial communication signal visibility obscuration map comprises a multidimensional array of quantized transmitter obscuration values defined in terms of geometric coordinates of respective fields of view of said plurality of signal receptors.

9. The method according to claim 8, wherein said quantized transmitter obscuration values include first values representative of an effectively unobstructed view of said transmitter by a respective signal receptor, and second values representative of an effectively obstructed view of said transmitter by said respective signal receptor.

10. The method according to claim 9, wherein said quantized transmitter obscuration values further include third values representative of a transition between a first region of said respective spatial communication signal visibility obscuration map containing said first values and a second region of said respective spatial communication signal visibility obscuration map containing said second values.

FIG. 1
(PRIOR ART)

"UNKNOWN"
BUT POSSIBLY AVAILABLE
FROM EPHEMERIS PROCESSOR

SHORE IS ZERO
SHIP MEASURED
SUB-M INDIRECT MEASUREMENT
SUB-P UNAVAILABLE

$$\ddot{R}'_{LOS} = \ddot{R}'_{SAT} + \ddot{R}'_{TERM}$$

ESTIMATE AVAILABLE FROM TERMINAL
FREQUENCY TRACKER

$$\frac{R'_{ERR}}{c} = \frac{v'_{ERR}}{c} = \gamma \iff f_{ERR} = \gamma f_o$$

$$\frac{R'_{ERR}}{c} = \tau_{ERR}$$

X

Z    Y

2

FIG. 2

EP 1 936 836 A2

FIG. 3

FIG. 4

FIG. 5

FIG. 6

FIG. 7

FIG. 8

| ANT 601 | ANT 602 | RESULT |
|---------|---------|--------|
| O | CL | ANT 602 |
| O | T | ANT 602 |
| O | O | PREVENT |
| T | CL | ANT 602 |
| T | T | ARB ALG |
| T | O | ANT 601 |
| CL | CL | ARB ALG |
| CL | T | ANT 601 |
| CL | O | ANT 601 |

FIG. 9

FIG. 10

FIG. 11

FIG. 12

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

*   US 384868 A